# EUROPEAN PATENT APPLICATION

(11) **EP 4 840 768 A1**
(43) Date of publication of application: **18.11.2026**
(21) Application number: 24918178.5
(22) Date of filing: 06.11.2024
(51) Int. Cl.: B64U 70/93

(54) **LIFTING DEVICE FOR UNMANNED AERIAL VEHICLE HANGAR, UNMANNED AERIAL VEHICLE HANGAR, UNMANNED AERIAL VEHICLE ASSEMBLY, AND VEHICLE**

(30) Priority: 15.01.2024 CN 202410060031
(71) Applicant: BYD Company Limited, Shenzhen, Guangdong 518118 (CN)
(72) Inventor: XIAO, Guanjia, Shenzhen, Guangdong 518118 (CN); ZHAO, Shenglei, Shenzhen, Guangdong 518118 (CN); FENG, Xu, Shenzhen, Guangdong 518118 (CN); ZOU, Xiuxian, Shenzhen, Guangdong 518118 (CN)
(74) Representative: Taor, Simon Edward William
(86) International application number: PCT/CN2024/130164
(87) International publication number: WO 2025/152569

(57) **Abstract**

A vehicle includes a drone assembly. The drone assembly includes a drone hangar. A drone hangar lifting apparatus includes a lifting assembly, a drive member, and a crank assembly. The lifting assembly is adapted for placing a drone. The crank assembly is separately in transmission connection to the drive member and the lifting assembly. The drive member is adapted to drive, through the crank assembly, the lifting assembly to be lifted or lowered.

## Description

### CROSS-REFERENCE TO RELATED APPLICATIONS

The present disclosure claims priority to Chinese Patent Application No. 202410060031.X, filed with the China National Intellectual Property Administration on January 15, 2024, and entitled "DRONE HANGAR LIFTING APPARATUS, DRONE HANGAR, DRONE ASSEMBLY, AND VEHICLE", which is incorporated herein by reference in its entirety.

### TECHNICAL FIELD

The present disclosure relates to the field of vehicle technologies, and in particular, to a drone hangar lifting apparatus, a drone hangar, a drone assembly, and a vehicle.

### BACKGROUND

In a related technology, the drone hangar lifting apparatus usually includes a plurality of hinged link mechanisms. The plurality of link mechanisms have unstable factors and low stability performance. A drone is prone to shaking during lifting, affecting normal operation of the drone.

### SUMMARY

The present disclosure is intended to resolve at least one of technical problems existing in a conventional technology. Therefore, the present disclosure proposes a drone hangar lifting apparatus. The drone hangar lifting apparatus has a simple structure, fewer parts, and is easy to maintain.

The present disclosure further proposes a drone hangar.

The present disclosure further proposes a drone assembly.

The present disclosure further proposes a vehicle.

The drone hangar lifting apparatus according to the present disclosure includes: a lifting assembly, adapted for placing a drone; a drive member; and a crank assembly, the crank assembly being separately in transmission connection to the drive member and the lifting assembly, and the drive member being adapted to drive, through the crank assembly, the lifting assembly to be lifted or lowered.

According to the drone hangar lifting apparatus in the present disclosure, the drive member controls rise and fall of the drone by driving the lifting assembly to rise and fall through the crank assembly, making movement more flexible and stable. Moreover, the crank assembly and lifting assembly have simple structures, fewer parts, and are easy to maintain.

In some examples of the present disclosure, the drone hangar lifting apparatus further includes: a fastening bracket, the fastening bracket being provided with a first fitting hole, the crank assembly being movably disposed at the first fitting hole, and the crank assembly being hinged to the lifting assembly through the first fitting hole.

In some examples of the present disclosure, the fastening bracket extends in a first direction, the first fitting hole is constructed as an elongated hole in the first direction, and the crank assembly moves at the first fitting hole in the first direction.

In some examples of the present disclosure, the crank assembly includes a drive rod, a connection rod and a sliding rod, the drive member is drivingly connected to the drive rod, the drive rod is fastened to one end of the connection rod, the other end of the connection rod is hinged to one end of the sliding rod, and the other end of the sliding rod movably cooperates with the first fitting hole and is hinged to the lifting assembly.

In some examples of the present disclosure, there are two connection rods and two sliding rods, two ends of the drive rod are respectively fastened to the two connection rods, and the two connection rods and the two sliding rods are hinged in a one-to-one correspondence.

In some examples of the present disclosure, there are two fastening brackets, and the other ends of the two sliding rods cooperate with the first fitting holes on the two fastening brackets in a one-to-one correspondence.

In some examples of the present disclosure, the drive member is located between the two connection rods.

In some examples of the present disclosure, the sliding rod is provided with a first bending portion, and the first bending portion is hinged to the lifting assembly.

In some examples of the present disclosure, the lifting assembly includes: a lifting bracket, a first support member and a second support member, one end of the first support member is rotatably connected to the lifting bracket, the other end of the first support member movably cooperates with the first fitting hole and is hinged to the other end of the sliding rod, one end of the second support member is rotatably connected to the fastening bracket, and the other end of the second support member is movably disposed on the lifting bracket.

In some examples of the present disclosure, the lifting bracket is provided with a second fitting hole, and the other end of the second support member is movably disposed at the second fitting hole.

In some examples of the present disclosure, the lifting bracket extends in the first direction, the second fitting hole is constructed as an elongated hole in the first direction, and the other end of the second support member movably cooperates with the second fitting hole and is movable in the first direction.

In some examples of the present disclosure, the first support member and the second support member are disposed crosswise, and the first support member and the second support member are hinged at a crosswise position.

In some examples of the present disclosure, the first support member forms an included angle α with the first direction, the second support member forms an included angle β with the first direction, and values of α and β are in ranges of: 0°<α<90°, and 90°<β<180°.

In some examples of the present disclosure, the drone hangar lifting apparatus further includes a fastening member, and the fastening member is fastened at the crosswise position of the first support member and the second support member.

In some examples of the present disclosure, the drone hangar lifting apparatus further includes: a shim, and the shim abutting between the fastening member and the first support member; and/or the shim abutting between the fastening member and the second support member.

In some examples of the present disclosure, two ends of the first support member are provided with protrusion portions, and the protrusion portion protrudes toward an end away from the fastening bracket.

In some examples of the present disclosure, an end that is of the second support member and that is away from the fastening bracket is provided with a second bending portion, to avoid the first support member and the sliding rod when the lifting assembly descends.

In some examples of the present disclosure, the drone hangar lifting apparatus further includes: a guide bracket, a lower end of the guide bracket being fastened to the fastening bracket, in a second direction, an end of the lifting bracket being slidably disposed on the guide bracket, and the first direction being perpendicular to the second direction.

In some examples of the present disclosure, the guide bracket is disposed at an end that is of the fastening bracket and that is away from the crank assembly.

In some examples of the present disclosure, one of the guide bracket and the lifting bracket is provided with a slide groove, the other of the guide bracket and the lifting bracket is provided with a sliding block, the sliding block slidably cooperates in the slide groove, and the slide groove extends in the second direction.

In some examples of the present disclosure, the lifting assembly further includes: a lifting plate, and the lifting plate being fastened to a side that is of the lifting bracket and that is away from the fastening bracket.

The drone hangar according to the present disclosure includes: a rack; a centering apparatus; and the foregoing drone hangar lifting apparatus, the fastening bracket and the drive member both being fastened to the rack, and the centering apparatus being disposed on the lifting assembly.

The drone assembly according to the present disclosure includes: a drone; and the foregoing drone hangar, and the drone being capable of taking off from the lifting assembly and landing on the lifting assembly.

The vehicle according to the present disclosure includes: the foregoing drone assembly.

Additional aspects and advantages of the present disclosure will be given in part in the following descriptions and in part will be obvious from the following descriptions, or will be learned from the practice of the present disclosure.

### BRIEF DESCRIPTION OF DRAWINGS

The above and/or additional aspects and advantages of the present disclosure will become apparent and readily understood from the descriptions of embodiments taken in conjunction with the following accompanying drawings.
FIG. 1 is a diagram of a structure of a drone hangar according to an embodiment of the present disclosure;
FIG. 2 is a diagram of a structure of a drone assembly according to an embodiment of the present disclosure;
FIG. 3 is a diagram of a first partial structure of a drone hangar lifting apparatus according to an embodiment of the present disclosure;
FIG. 4 is a diagram of a second partial structure of a drone hangar lifting apparatus according to an embodiment of the present disclosure;
FIG. 5 is a diagram of a third partial structure of a drone hangar lifting apparatus according to an embodiment of the present disclosure;
FIG. 6 is a diagram of a fourth partial structure of a drone hangar lifting apparatus according to an embodiment of the present disclosure;
FIG. 7 is a diagram of a structure of a second support member;
FIG. 8 is a block diagram of a drone hangar according to an embodiment of the present disclosure;
FIG. 9 is a block diagram of a drone assembly according to an embodiment of the present disclosure; and
FIG. 10 is a block diagram of a vehicle according to an embodiment of the present disclosure.

Reference numerals:
1: drone hangar lifting apparatus;
10: lifting assembly; 11: lifting bracket; 111: second fitting hole; 12: lifting plate; 20: fastening bracket; 21: first fitting hole; 30: telescopic assembly; 31: first support member; 311: protrusion portion; 32: second support member; 321: second bending portion; 40: drive assembly; 41: drive member; 42: crank assembly; 421: drive rod; 422: connection rod; 423: sliding rod; 4231: first bending portion; 50: guide bracket; 51: slide groove; 60: fastening member; 70: shim; 2: drone hangar; 201: centering apparatus; 3: drone assembly; 301: drone; 1000: vehicle; 52: sliding block; 53: rack.

### DESCRIPTION OF EMBODIMENTS

Embodiments of the present disclosure are described in detail below. Embodiments described with reference to the accompanying drawings are examples.

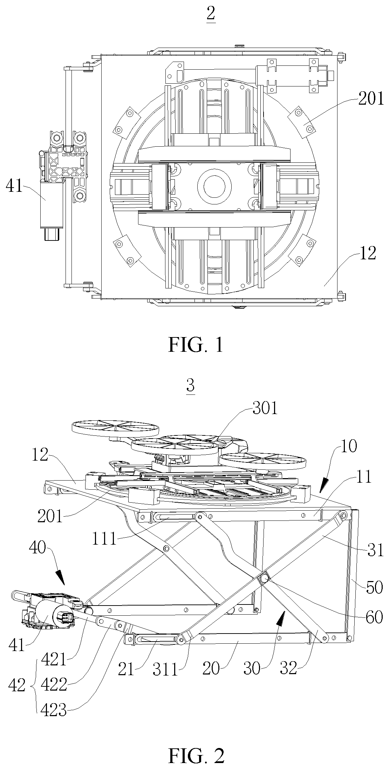

A drone hangar lifting apparatus 1 according to an embodiment of the present disclosure is described below with reference to FIG. 1 to FIG. 7. The drone hangar lifting apparatus 1 can be disposed on a vehicle for lifting and lowering a drone 301.

As shown in FIG. 2, the drone hangar lifting apparatus 1 according to an embodiment of the present disclosure includes a lifting assembly 10 and a drive assembly 40. The drive assembly 40 includes a drive member 41 and a crank assembly 42. The lifting assembly 10 is mainly used for lifting and lowering, which can drive a corresponding component to perform lifting and lowering operations. The drive member 41 mainly serves a drive function. The crank assembly 42 mainly serves a function of transmission.

As shown in FIG. 2, the lifting assembly 10 is adapted for placing the drone 301. That is, the drone 301 can be set on the lifting assembly 10, which makes it easy to set up the drone 301. Moreover, the lifting assembly 10 can be used to lift the drone 301, thereby facilitating take-off and landing of the drone 301.

As shown in the figure, the crank assembly 42 is separately in transmission connection to the drive member 41 and the lifting assembly 10. The drive member 41 is adapted to drive, through the crank assembly 42, the lifting assembly 10 to be lifted or lowered. In other words, power provided by the drive member 41 can be transmitted to the crank assembly 42, thereby driving the crank assembly 42 to perform corresponding actions. The crank assembly 42 is in transmission connection to the lifting assembly 10, so that the crank assembly 42 can drive the lifting assembly 10 to perform corresponding lifting and lowering actions. In this way, the drive member 41 can drive, through the crank assembly 42, the lifting assembly 10 to perform lifting and lowering actions.

In this way, the drive member 41 controls rise and fall of the drone 301 by driving the lifting assembly 10 to rise and fall through the crank assembly 42, making movement more flexible and stable. This makes lifting and falling of the lifting assembly 10 more stable, and in turn, makes lifting and falling of the drone 301 more stable. Moreover, the crank assembly 42 and the lifting assembly 10 have simple structures, fewer parts, and are easy to maintain.

In addition, as shown in the figure, the drone hangar lifting apparatus 1 further includes a fastening bracket 20, and the fastening bracket 20 is provided with a first fitting hole 21. The crank assembly 42 is movably disposed at the first fitting hole 21, and the crank assembly 42 is hinged to the lifting assembly 10 through the first fitting hole 21. The fastening bracket 20 mainly serves functions of mounting and support. The first fitting hole 21 mainly serves a cooperation function. Through disposing of the first fitting hole 21 on the fastening bracket 20, the fastening bracket 20 can support and limit a corresponding component through the first fitting hole 21 when the corresponding component cooperates with the first fitting hole 21.

The crank assembly 42 is movably disposed at the first fitting hole 21, that is, the crank assembly 42 can move at the first fitting hole 21. Furthermore, the crank assembly 42 is hinged to the lifting assembly 10 through the first fitting hole 21, so that the crank assembly 42 can rotate relative to the lifting assembly 10, that is, the crank assembly 42 can further transmit power to the lifting assembly 10. Specifically, after the drive member 41 transmits power to the crank assembly 42, the crank assembly 42 moves, and movement of the crank assembly 42 drives the lifting assembly 10 to move at the first fitting hole 21, thereby realizing lifting and lowering actions of the lifting assembly 10, which in turn can drive the drone 301 to move in a second direction.

Furthermore, as shown in FIG. 2 to FIG. 5, the fastening bracket 20 extends in a first direction, the first fitting hole 21 is constructed as an elongated hole in the first direction, and the crank assembly 42 moves at the first fitting hole 21 in the first direction. The fastening bracket 20 extends in the first direction, which increases a size of the fastening bracket 20 in the first direction, thereby providing larger mounting space and a larger support area in the first direction. The first fitting hole 21 is constructed as the elongated hole in the first direction. In other words, the crank assembly 42 can drive the lifting assembly 10 to move at the first fitting hole 21 in the first direction. Specifically, the crank assembly 42 moves at the first fitting hole 21 in the first direction. Because the crank assembly 42 is hinged to the lifting assembly 10, the crank assembly 42 can drive the lifting assembly 10 to move at the first fitting hole 21 in the first direction. This arrangement is more appropriate and easier to arrange.

In addition, as shown in FIG. 2 to FIG. 5, the crank assembly 42 includes a drive rod 421, a connection rod 422, and a sliding rod 423. The drive member 41 is drivingly connected to the drive rod 421. The drive rod 421 is fastened to one end of the connection rod 422. The other end of the connection rod 422 is hinged to one end of the sliding rod 423. The other end of the sliding rod 423 movably cooperates with the first fitting hole 21 and is hinged to the lifting assembly 10.

The drive rod 421, the connection rod 422, and the sliding rod 423 can all serve a function of transmission. The drive member 41 is connected to the drive rod 421, so that the drive member 41 can directly transmit power to the drive rod 421, thereby driving the drive rod 421 to rotate. Because the drive rod 421 is fastened to the one end of the connection rod 422, rotation of the drive rod 421 drives the connection rod 422 to rotate. The other end of the connection rod 422 is hinged to the one end of the sliding rod 423, so that the other end of the connection rod 422 can drive the one end of the sliding rod 423 to rotate around a rotation center of the connection rod 422. Because the other end of the sliding rod 423 movably cooperates with the first fitting hole 21 and is hinged to the lifting assembly 10, when the one end of the sliding rod 423 rotates, the other end of the sliding rod 423 can drive the lifting assembly 10 to move along the first fitting hole 21 at the fitting hole, thereby driving the lifting assembly 10 to perform lifting and lowering actions.

Furthermore, as shown in FIG. 2 to FIG. 5, there are two connection rods 422 and two sliding rods 423. Two ends of the drive rod 421 are respectively fastened to the two connection rods 422, and the two connection rods 422 and the two sliding rods 423 are hinged in a one-to-one correspondence. In other words, there is only one drive member 41 and one drive rod 421. When the drive member 41 drives the drive rod 421 to rotate, the two ends of the drive rod 421 can drive the connection rods 422 on both sides to rotate. Rotation of the connection rods 422 on the both sides drives the sliding rods 423 on both sides to move. In this way, one drive member 41 can drive the sliding rods 423 on the both sides to simultaneously move, thereby simultaneously driving the lifting assembly 10 from the both sides, making a lifting action of the lifting assembly 10 more stable.

Specifically, as shown in FIG. 2 to FIG. 4, there are two fastening brackets 20, and the other ends of the two sliding rods 423 cooperate with first fitting holes 21 on the two fastening brackets 20 in a one-to-one correspondence. The two fastening brackets 20 are disposed, and the other ends of the two sliding rods 423 respectively cooperate with the first fitting holes 21 on the two fastening brackets 20. In this way, when the drive member 41 drives, through the drive rod 421 and the connection rod 422, the two sliding rods 423 on the both sides to move, the sliding rods 423 on both sides can respectively cooperate with the first fitting holes 21 on the fastening brackets 20 on the both sides. In this way, the sliding rods 423 on the both sides can simultaneously drive the lifting assembly 10 from both sides, thereby making movement of the lifting assembly 10 more stable.

In addition, as shown in FIG. 2 to FIG. 4, the drive member 41 is located between the two connection rods 422. This arrangement is more appropriate, allowing for a more compact structure and reducing a volume required for assembly. Furthermore, this can shorten a distance between the drive member 41 and the two connection rods 422 on the both sides, making it easier for the drive member 41 to cooperate with the two connection rods 422 on the both sides through the drive rod 421.

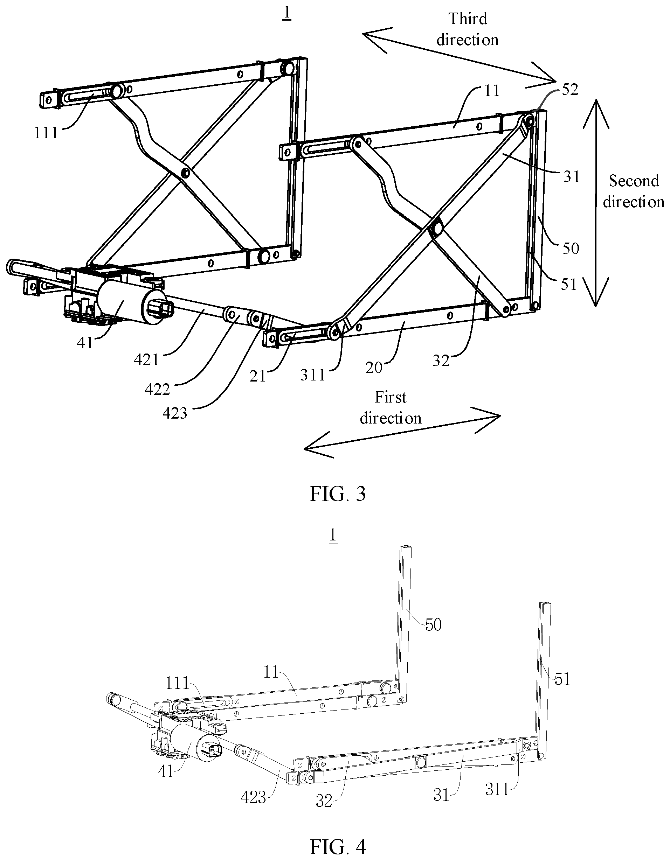

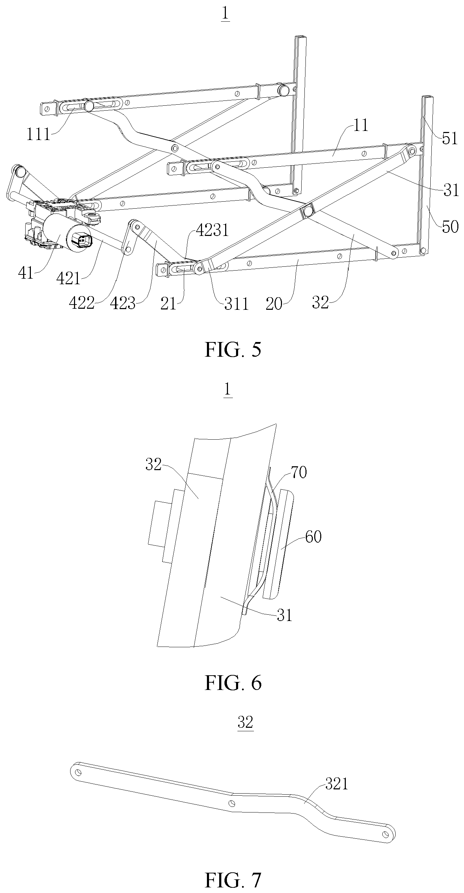

Furthermore, as shown in FIG. 4 and FIG. 5, the sliding rod 423 is provided with a first bending portion 4231, and the first bending portion 4231 is hinged to the lifting assembly 10. The first bending portion 4231 is a connection part between the sliding rod 423 and the lifting assembly 10. Through disposing of the first bending portion 4231, specifically, when the other end of the sliding rod 423 cooperates with the lifting assembly 10, a direction of the first bending portion 4231 is closer to the first direction than other positions of the sliding rod 423, so that the sliding rod 423 can more easily push the lifting assembly 10 to move at the first fitting hole 21.

Furthermore, as shown in FIG. 1 and FIG. 2, the lifting assembly 10 includes a lifting bracket 11 and a telescopic assembly 30. One end of the telescopic assembly 30 is rotatably connected to the lifting bracket 11, and the other end of the telescopic assembly 30 cooperates at the first fitting hole 21. The other end of the sliding rod 423 is hinged to the other end of the telescopic assembly 30 through the first fitting hole 21. The lifting bracket 11 mainly serves functions of support and lifting. The telescopic assembly 30 mainly serves a function of telescopic drive.

The one end of the telescopic assembly 30 is rotatably connected to the lifting bracket 11. That is, the one end of the telescopic assembly 30 can rotate relative to the lifting bracket 11. It should be noted that a height of the telescopic assembly 30 in the second direction is adjusted through rotation. In this way, when the telescopic assembly 30 rotates, the telescopic assembly 30 can drive the lifting bracket 11 to move in the second direction, thereby realizing movement of the lifting assembly 10 in the second direction, that is, realizing lifting and lowering actions of the drone 301. The other end of the telescopic assembly 30 cooperates with the first fitting hole 21. In this way, when the telescopic assembly 30 rotates, the first fitting hole 21 can limit the other end of the telescopic assembly 30, thereby controlling a rotation angle of the telescopic assembly 30. In addition, the first fitting hole 21 can also support the telescopic assembly 30, making rotation of the telescopic assembly 30 more stable.

The other end of the sliding rod 423 is hinged to the other end of the telescopic assembly 30 through the first fitting hole 21, so that the other end of the sliding rod 423 can rotate relative to the other end of the telescopic assembly 30, that is, the sliding rod 423 can transmit power to the telescopic assembly 30. Specifically, after the drive member 41 transmits power to the sliding rod 423 through the drive rod 421 and the connection rod 422, the sliding rod 423 moves, and movement of the sliding rod 423 drives the other end of the telescopic assembly 30 to move at the first fitting hole 21, thereby realizing rotation of the telescopic assembly 30, which in turn can drive the lifting assembly 10 to move in the second direction.

Specifically, as shown in FIG. 2 to FIG. 5, the telescopic assembly 30 includes a first support member 31 and a second support member 32. One end of the first support member 31 is rotatably connected to the lifting bracket 11, and the other end of the first support member 31 movably cooperates with the first fitting hole 21 and is hinged to the other end of the sliding rod 423. One end of the second support member 32 is rotatably connected to the fastening bracket 20, and the other end of the second support member 32 is movably disposed on the lifting bracket 11. The first support member 31 mainly serves functions of transmission and support, and the second support member 32 mainly serves a function of transmission. Specifically, the one end of the first support member 31 is rotatably connected to the lifting bracket 11, the other end of the first support member 31 movably cooperates with the first fitting hole 21, and the other end of the first support member 31 is hinged to the other end of the sliding rod 423. In this way, when the drive member 41 drives, through the drive rod 421 and the connection rod 422, the sliding rod 423 to move, the other end of the sliding rod 423 drives the other end of the first support member 31 to move at the first fitting hole 21 in the first direction. As a result, the one end of the first support member 31 is lifted and lowered in the second direction. Because the one end of the first support member 31 is rotatably connected to the lifting bracket 11, the one end of the first support member 31 can drive the lifting bracket 11 to be lifted and lowered in the second direction, thereby realizing a lifting function of the lifting assembly 10. For example, when the other end of the first support member 31 moves toward the one end of the first support member 31 in the first direction, a projected length of the first support member 31 in the second direction becomes longer, and the lifting apparatus is lifted.

The one end of the second support member 32 is rotatably connected to the fastening bracket 20, and the other end of the second support member 32 is movably disposed on the lifting bracket 11. In other words, the one end of the second support member 32 can rotate relative to the fastening bracket 20, and the other end of the second support member 32 can move on the lifting bracket 11. In this way, while the first support member 31 drives the lifting bracket 11 to move in the second direction, the lifting bracket 11 drives the other end of the second support member 32 to move in the second direction. It should be noted that the second support member 32 is in a rotating state as a whole. Because the one end of the second support member 32 is rotatably connected to the fastening bracket 20, the second support member 32 can support the lifting bracket 11 to some extent, thereby making movement of the lifting bracket 11 more stable.

In addition, as shown in FIG. 2 and FIG. 3, the lifting bracket 11 is provided with a second fitting hole 111, and the other end of the second support member 32 is movably disposed at the second fitting hole 111. The second fitting hole 111 mainly serves a cooperation function. Through disposing of the second fitting hole 111 on the lifting bracket 11, the lifting bracket 11 can support and limit a corresponding component through the second fitting hole 111 when the corresponding component cooperates with the second fitting hole 111. Specifically, the other end of the second support member 32 is movably disposed at the second fitting hole 111. That is, the other end of the second support member 32 can move at the second fitting hole 111. In this way, when the lifting bracket 11 moves in the second direction, the other end of the second support member 32 can better maintain a connection to the lifting bracket 11. Moreover, the second fitting hole 111 can support and limit the other end of the second support member 32 and control a rotation angle of the second support member 32, so that the other end of the second support member 32 can better cooperate with the lifting bracket 11.

In addition, as shown in FIG. 2 to FIG. 5, the lifting bracket 11 extends in the first direction, the second fitting hole 111 is constructed as an elongated hole in the first direction, and the other end of the second support member 32 movably cooperates with the second fitting hole 111 and can move in the first direction. The lifting bracket 11 extends in the first direction, which increases a size of the lifting bracket 11 in the first direction, thereby providing larger mounting and support space in the first direction. The second fitting hole 111 is constructed as the elongated hole in the first direction, and the other end of the second support member 32 movably cooperates with the second fitting hole 111 and can move in the first direction. In other words, the other end of the second support member 32 can move in the first direction. Specifically, when the lifting bracket 11 moves in the second direction, the other end of the second support member 32 can move at the second fitting hole 111 in the first direction. Because the one end of the second support member 32 is hinged to the fastening bracket 20, the second support member 32 can better cooperate with the fastening bracket 20 and the lifting bracket 11. This arrangement is more appropriate and easier to arrange.

Furthermore, as shown in FIG. 2 and FIG. 3, the first support member 31 and the second support member 32 are disposed crosswise, and the first support member 31 and the second support member 32 are hinged at a crosswise position. In can be learned from the figure, in a third direction, the first support member 31 and the second support member 32 can form a scissor fork structure. The scissor fork structure is more stable during operation and has high transmission efficiency, which can make the lifting bracket 11 move more stably. In addition, the scissor fork structure is simple, which can save costs.

Specifically, as shown in FIG. 3 to FIG. 5, the first support member 31 forms an included angle α with the first direction, and the second support member 32 forms an included angle β with the first direction. The values of α and β are in ranges of: 0°<α<90°, and 90°<β<180°. In other words, the included angle between the first support member 31 and the first direction needs to meet a specific range, that is, the included angle between the first support member 31 and the first direction needs to be greater than 0°. This can prevent the one end of the first support member 31 from being stuck with the lifting bracket 11, thereby facilitating driving of the first support member 31 to move in the second direction. Similarly, the included angle between the second support member 32 and the first direction needs to be less than 180°, to prevent the one end of the second support member 32 from being stuck with the fastening bracket 20, thereby facilitating movement of the second support member 32.

The included angle between the first support member 31 and the first direction needs to be less than 90°, and the included angle between the second support member 32 and the first direction needs to be greater than 90°. In this way, the first support member 31 and the second support member 32 can always maintain an intersecting state, thereby making cooperation between the first support member 31 and the lifting plate 12 and between the second support member 32 and the lifting plate 12 more stable.

In addition, as shown in FIG. 6, the drone hangar lifting apparatus 1 further includes a fastening member 60, and the fastening member 60 is fastened at the crosswise position of the first support member 31 and the second support member 32. The fastening member 60 mainly serves a fastening function. Fastening the fastening member 60 at the crosswise position of the first support member 31 and the second support member 32 can makes a connection between the first support member 31 and the second support member 32 more stable. Moreover, the first support member 31 and the second support member 32 can rotate around the fastening member 60, so that the first support member 31 and the second support member 32 can better lift and support the lifting plate 12. The fastening member 60 can be a combination of a bolt and a nut.

In addition, as shown in FIG. 6, the drone hangar lifting apparatus 1 further includes a shim 70. The shim 70 abuts between the fastening member 60 and the first support member 31, and/or the shim 70 abuts between the fastening member 60 and the second support member 32. The shim 70 mainly serves a function of eliminating a gap. The shim 70 abuts between the fastening member 60 and the first support member 31. In this way, after the fastening member 60 is fastened, the shim 70 can be used to eliminate a gap between the first support member 31 and the second support member 32, thereby preventing the first support member 31 and the second support member 32 from shaking during movement, making movement of the lifting plate 12 more stable. Alternatively, the shim 70 can abut between the fastening member 60 and the second support member 32. In this way, after the fastening member 60 is fastened, the shim 70 can be used to eliminate a gap between the first support member 31 and the second support member 32, thereby preventing the first support member 31 and the second support member 32 from shaking during movement, making movement of the lifting plate 12 more stable. Certainly, two shims 70 can alternatively be used to respectively abut between the fastening member 60 and the first support member 31 and between the fastening member 60 and the second support member 32, which can also eliminate a gap between the first support member 31 and the second support member 32.

Furthermore, as shown in FIG. 2 to FIG. 5, two ends of the first support member 31 are provided with protrusion portions 311, and the protrusion portion 311 protrudes toward an end away from the fastening bracket 20. The protrusion portion 311 mainly serves a function of avoiding. The protrusion portion 311 protrudes toward the end away from the fastening bracket 20. This allows the protrusion portion 311 to avoid the second support member 32 when the lifting bracket 11 moves toward the fastening bracket 20 in the second direction, thereby avoiding interference between the first support member 31 and the second support member 32, allowing the lifting bracket 11 to perform lifting and lowering actions more effectively.

Specifically, as shown in FIG. 7, an end that is of the second support member 32 and that is away from the fastening bracket 20 is provided with a second bending portion 321, to avoid the first support member 31 and the sliding rod 423 when the lifting assembly 10 descends. The second bending portion 321 also mainly serves a function of avoiding. The second bending portion 321 is disposed at the end that is of the second support member 32 and that is away from the fastening member 60. This arrangement is more appropriate. When the lifting assembly 10 descends, the second bending portion 321 can avoid a connection position between the sliding rod 423 and the first support member 31, thereby preventing interference between the second support member 32 and the sliding rod 423. Furthermore, when the second support member 32 retracts, the second support member 32 can be closer to the fastening bracket 20, to facilitate descent and retraction of the lifting assembly 10. It should be noted that the sliding rod 423 and the first support member 31 can be rotatably connected through a shaft, and the second bending portion 321 can avoid the shaft.

In addition, as shown in FIG. 2 to FIG. 5, the drone hangar lifting apparatus 1 further includes a guide bracket 50. A lower end of the guide bracket 50 is fastened to the fastening bracket 20. In the second direction, an end of the lifting bracket 11 is slidably disposed on the guide bracket 50. The first direction is perpendicular to the second direction. The guide bracket 50 mainly serves a guiding function. A lower end of the guide bracket 50 is fastened to the fastening bracket 20, which can fasten the guide bracket 50 and make a connection between the guide bracket 50 and the fastening bracket 20 more stable. It should be noted that a length direction of the guide bracket 50 is the second direction. Because the second direction is perpendicular to the first direction, the guide bracket 50 is perpendicular to the fastening bracket 20. In the second direction, the one end of the lifting bracket 11 is slidably disposed on the guide bracket 50. That is, the lifting bracket 11 moves in the second direction, and during sliding, the guide bracket 50 can guide the one end of the lifting bracket 11, thereby making movement of the lifting bracket 11 more stable.

In addition, as shown in FIG. 2 to FIG. 4, the guide bracket 50 is disposed at an end that is of the fastening bracket 20 and that is away from the crank assembly 42. This arrangement is more appropriate and can better realize a telescopic function of the telescopic assembly 30, thereby better lifting the lifting bracket 11. Furthermore, this can prevent interference between the guide bracket 50 and the crank assembly 42, thereby allowing both the guide bracket 50 and the crank assembly 42 to work better.

Furthermore, as shown in FIG. 3 to FIG. 5, one of the guide bracket 50 and the lifting bracket 11 is provided with a slide groove 51, and the other of the guide bracket 50 and the lifting bracket 11 is provided with a sliding block 52. The sliding block 52 slidably cooperates in the slide groove 51, and the slide groove 51 extends in the second direction. For example, if the guide bracket 50 is provided with the slide groove 51, the lifting bracket 11 is provided with the sliding block 52. The slide groove 51 mainly serves functions of guiding and limiting, and the sliding block 52 mainly serves functions of guiding and cooperation. The sliding block 52 is slidably disposed in the slide groove 51, and the slide groove 51 extends in the second direction. In this way, the slide groove 51 can limit and guide movement of the sliding block 52 in the second direction, thereby making movement of the sliding block 52 more stable, and making movement of the lifting bracket 11 in the second direction more stable. Certainly, the one end of the lifting bracket 11 can alternatively movably cooperate with the slide groove 51 without the sliding block 52.

In addition, as shown in FIG. 1 and FIG. 2, the lifting assembly 10 further includes a lifting plate 12, and the lifting plate 12 is fastened to a side that is of the lifting bracket 11 and that is away from the fastening bracket 20. The lifting plate 12 mainly serves functions of lifting and support. The lifting plate 12 is fastened to the lifting bracket 11, which can fasten the lifting plate 12, making the lifting plate 12 more secure and stable. In this way, when the lifting bracket 11 moves in the second direction, the lifting plate 12 can also move more stably with the lifting bracket 11, thereby providing better support. The lifting plate 12 is disposed on the side that is of the lifting bracket 11 and that is away from the fastening bracket 20. This arrangement is more appropriate and facilitates the lifting plate 12 in supporting a centering apparatus 201 and the drone 301.

As shown in FIG. 1, FIG. 2 and FIG. 8, a drone hangar 2 according to an embodiment of the present disclosure includes a rack 53, a centering apparatus 201, and the drone hangar lifting apparatus 1 in the foregoing embodiments. The fastening bracket 20 and the drive member 41 are both fastened to the rack 53, and the centering apparatus 201 is disposed on the lifting assembly 10. The rack 53 mainly serves functions of mounting and support. Fastening the fastening bracket 20 and the drive member 41 to the rack 53 can fasten the fastening bracket 20 and the drive member 41, making the fastening bracket 20 and the drive member 41 more secure and stable, allowing the fastening bracket 20 and the drive member 41 to work better. The centering apparatus 201 mainly serves a function of centering, and can center and locate a drone 301. The centering apparatus 201 is disposed on the lifting assembly 10, which can fasten the centering apparatus 201. This allows the centering apparatus 201 to move with the lifting assembly 10 in the second direction, thereby realizing lifting and lowering of the drone 301.

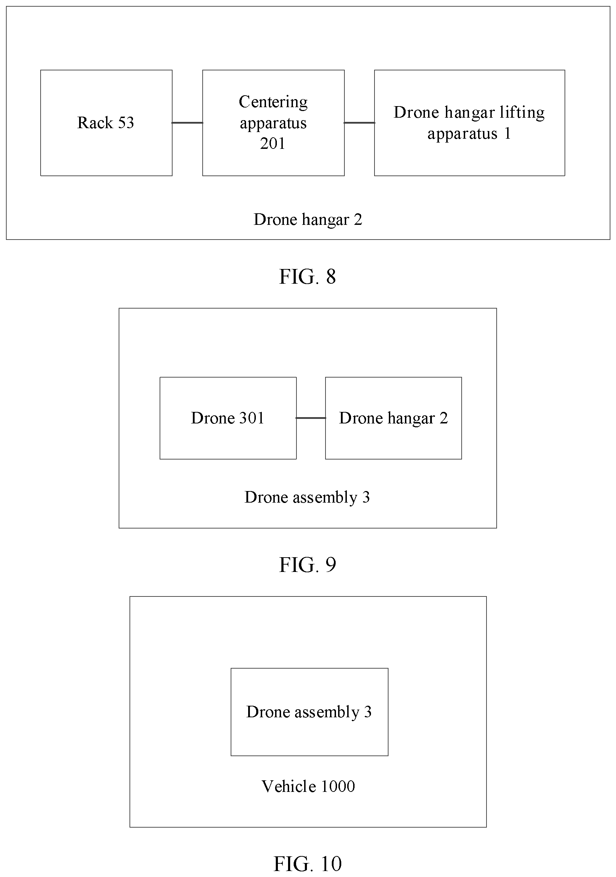

As shown in FIG. 2, a drone assembly 3 according to an embodiment of the present disclosure, as shown in FIG. 9, includes: a drone 301 and the drone hangar 2 in the foregoing embodiments. The drone 301 is capable of taking off from the lifting assembly 10 and landing on the lifting assembly 10. Specifically, when it is necessary to launch the drone 301, the crank assembly 42 can be used to drive the telescopic assembly 30 to extend to lift the lifting assembly 10, thereby facilitating taking off of the drone 301. When it is necessary to retrieve the drone 301, the crank assembly 42 can be used to drive the telescopic assembly 30 to retract to lower the lifting assembly 10, thereby facilitating landing and retrieval of the drone 301. This also allows for integrated design of the lifting assembly 10 and the centering apparatus 201, improving integration and automation of the drone hangar 2 and reducing a volume occupied by the drone assembly 3.

It should be noted that quantities of telescopic assemblies 30, fastening brackets 20, and drive assemblies 40 can be a plurality of sets. For example, the quantities of telescopic assemblies 30, fastening brackets 20, and drive assemblies 40 can all be two sets. This can provide more comprehensive support for the lifting assembly 10, thereby making movement of the lifting assembly 10 more stable.

The vehicle 1000 according to an embodiment of the present disclosure, as shown in FIG. 10, includes the foregoing drone assembly 3.

In descriptions of the present disclosure, it should be understood that orientation or position relationships indicated by terms "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are orientation or position relationships based on the accompanying drawings, and are merely intended for ease of describing the present disclosure and simplifying the descriptions, but are not intended to indicate or imply that a specified apparatus or element needs to have a specific orientation or be constructed and operated in a specific orientation. Therefore, this cannot be understood as a limitation on the present disclosure.

In description of the present disclosure, a "first feature" or a "second feature" may include one or more features. In descriptions of the present disclosure, "a plurality of" means two or more. In descriptions of the present disclosure, that a first feature is "above" or "below" a second feature may include that the first feature is in direct contact with the second feature, or may include that the first feature is not in direct contact with the second feature but is in contact with the second feature through another feature between the first feature and the second feature. In descriptions of the present disclosure, that the first feature is "above", "over", and "beyond" the second feature includes that the first feature is right above and obliquely above the second feature, or merely indicates that the first feature is horizontally higher than the second feature.

In the descriptions of this specification, reference to descriptions of the terms such as "one embodiment", "some embodiments", "example embodiment", "example", "specific example", or "some examples" means that specific features, structures, materials, or features described with reference to embodiments or examples are included in at least one embodiment or example of the present disclosure. In this specification, example expressions of the foregoing terms do not necessarily indicate same embodiments or examples.

Although embodiments of the present disclosure have been shown and described, a person of ordinary skill in the art may understand that various changes, modifications, substitutions, and variations may be made to these embodiments without departing from the principle and spirit of the present disclosure. The scope of the present disclosure is defined by the claims and their equivalents.

## Claims

1. A drone hangar lifting apparatus (1), comprising:
a lifting assembly (10), adapted for placing a drone (301);
a drive member (41); and
a crank assembly (42), the crank assembly (42) being separately in transmission connection to the drive member (41) and the lifting assembly (10), and the drive member (41) being adapted to drive, through the crank assembly (42), the lifting assembly (10) to be lifted or lowered.

2. The drone hangar lifting apparatus (1) according to claim 1, further comprising:
a fastening bracket (20), the fastening bracket (20) being provided with a first fitting hole (21), the crank assembly (42) being movably disposed at the first fitting hole (21), and the crank assembly (42) being hinged to the lifting assembly (10) through the first fitting hole (21).

3. The drone hangar lifting apparatus (1) according to claim 2, wherein the fastening bracket (20) extends in a first direction, the first fitting hole (21) is constructed as an elongated hole in the first direction, and the crank assembly (42) moves at the first fitting hole (21) in the first direction.

4. The drone hangar lifting apparatus (1) according to claim 3, wherein the crank assembly (42) comprises a drive rod (421), a connection rod (422) and a sliding rod (423), the drive member (41) is drivingly connected to the drive rod (421), the drive rod (421) is fastened to one end of the connection rod (422), the other end of the connection rod (422) is hinged to one end of the sliding rod (423), and the other end of the sliding rod (423) movably cooperates with the first fitting hole (21) and is hinged to the lifting assembly (10).

5. The drone hangar lifting apparatus (1) according to claim 4, wherein there are two connection rods (422) and two sliding rods (423), two ends of the drive rod (421) are respectively fastened to the two connection rods (422), and the two connection rods (422) and the two sliding rods (423) are hinged in a one-to-one correspondence.

6. The drone hangar lifting apparatus (1) according to claim 4 or 5, wherein there are two fastening brackets (20), and the other ends of the two sliding rods (423) cooperate with the first fitting holes (21) on the two fastening brackets (20) in a one-to-one correspondence.

7. The drone hangar lifting apparatus (1) according to any one of claims 4 to 6, wherein the drive member (41) is located between the two connection rods (422).

8. The drone hangar lifting apparatus (1) according to any one of claims 4 to 7, wherein the sliding rod (423) is provided with a first bending portion (4231), and the first bending portion (4231) is hinged to the lifting assembly (10).

9. The drone hangar lifting apparatus (1) according to any one of claims 4 to 8, wherein the lifting assembly (10) comprises a lifting bracket (11), a first support member (31), and a second support member (32), one end of the first support member (31) is rotatably connected to the lifting bracket (11), the other end of the first support member (31) movably cooperates with the first fitting hole (21) and is hinged to the other end of the sliding rod (423), one end of the second support member (32) is rotatably connected to the fastening bracket (20), and the other end of the second support member (32) is movably disposed on the lifting bracket (11).

10. The drone hangar lifting apparatus (1) according to claim 9, wherein the lifting bracket (11) is provided with a second fitting hole (111), and the other end of the second support member (32) is movably disposed at the second fitting hole (111).

11. The drone hangar lifting apparatus (1) according to claim 10, wherein the lifting bracket (11) extends in the first direction, the second fitting hole (111) is constructed as an elongated hole in the first direction, and the other end of the second support member (32) movably cooperates with the second fitting hole (111) and is movable in the first direction.

12. The drone hangar lifting apparatus (1) according to any one of claims 9 to 11, wherein the first support member (31) and the second support member (32) are disposed crosswise, and the first support member (31) and the second support member (32) are hinged at a crosswise position.

13. The drone hangar lifting apparatus (1) according to claim 12, wherein the first support member (31) forms an included angle α with the first direction, the second support member (32) forms an included angle β with the first direction, and values of α and β are in ranges of: 0°<α<90°, and 90°<β<180°.

14. The drone hangar lifting apparatus (1) according to claim 12 or 13, further comprising: a fastening member (60), and the fastening member (60) being fastened at the crosswise position of the first support member (31) and the second support member (32).

15. The drone hangar lifting apparatus (1) according to claim 14, further comprising: a shim (70), and the shim (70) abutting between the fastening member (60) and the first support member (31); and/or
the shim (70) abutting between the fastening member (60) and the second support member (32).

16. The drone hangar lifting apparatus (1) according to any one of claims 9 to 15, wherein two ends of the first support member (31) are provided with protrusion portions (311), and the protrusion portion (311) protrudes toward an end away from the fastening bracket (20).

17. The drone hangar lifting apparatus (1) according to any one of claims 9 to 16, wherein an end that is of the second support member (32) and that is away from the fastening bracket (20) is provided with a second bending portion (321), to avoid the first support member (31) and the sliding rod (423) when the lifting assembly (10) descends.

18. The drone hangar lifting apparatus (1) according to any one of claims 9 to 17, further comprising: a guide bracket (50), a lower end of the guide bracket (50) being fastened to the fastening bracket (20), in a second direction, an end of the lifting bracket (11) being slidably disposed on the guide bracket (50), and the first direction being perpendicular to the second direction.

19. The drone hangar lifting apparatus (1) according to claim 18, wherein the guide bracket (50) is disposed at an end that is of the fastening bracket (20) and that is away from the crank assembly (42).

20. The drone hangar lifting apparatus (1) according to claim 18 or 19, wherein one of the guide bracket (50) and the lifting bracket (11) is provided with a slide groove (51), the other of the guide bracket (50) and the lifting bracket (11) is provided with a sliding block (52), the sliding block (52) slidably cooperates in the slide groove (51), and the slide groove (51) extends in the second direction.

21. The drone hangar lifting apparatus (1) according to any one of claims 9 to 20, wherein the lifting assembly (10) further comprises: a lifting plate (12), and the lifting plate (12) being fastened to a side that is of the lifting bracket (11) and that is away from the fastening bracket (20).

22. A drone hangar (2), comprising:
a rack (53);
a centering apparatus (201); and
the drone hangar lifting apparatus (1) according to any one of claims 1 to 21, the fastening bracket (20) and the drive member (41) both being fastened to the rack (53), and the centering apparatus (201) being disposed on the lifting assembly (10).

23. A drone assembly (3), comprising:
a drone (301); and
the drone hangar (2) according to claim 22, and the drone (301) being capable of taking off from the lifting assembly (10) and landing on the lifting assembly (10).

24. A vehicle (1000), comprising: the drone assembly (3) according to claim 23.
